# EUROPEAN PATENT APPLICATION

(11) **EP 0 936 311 A2**
(43) Date of publication of application: **18.08.1999**
(21) Application number: 99300940.6
(22) Date of filing: 09.02.1999
(51) Int. Cl.: E01C 5/00, C04B 26/16

(54) **Road refurbishment method and mortar composition**

(30) Priority: 14.02.1998 GB 9803174
(71) Applicant: Hyperlast Limited, High Peak, Derbyshire SK22 1BR (GB)
(72) Inventor: Moss, Robert Malcolm, Glossop, Derbyshire SK13 6LH (GB); Fordyce, Derek Stanley Eoin, Edinburgh EH12 8YA (GB)
(74) Representative: Middlemist, Ian Alastair

(57) **Abstract**

In a road refurbishment method, a base layer (1) is established, and stone blocks (3) such as granite setts are placed with gaps between them on the base, using a bedding composition (2) if necessary. The gaps are filled with a jointing composition (4) which binds the setts, and the operation may be completed using a top jointing composition (5) to fill the gaps to road level. The compositions each comprise a polyol and a diisocyanate component which are mixed to react to form a polyurethane binding aggregate component which may comprise sand, crushed granite or the like.

## Description

This invention relates to a method of refurbishing road surfaces and to a mortar composition for use in the method.

Road surfaces comprising stone blocks, such as cobbles, slabs or stone sets are refurbished by excavating the stone blocks, providing or reinstating a suitable foundation such as a concrete footing, and replacing the stone blocks. The blocks may be seated and jointed with a conventional lime-sand mortar, which may include a synthetic resin or natural oil such as linseed for weather proofing. Where required, the stone blocks may be covered after re-setting with a Macadam, bitumen or asphalt surfacing.

The stone blocks are commonly granite sets, or other igneous or metamorphic rock such as basalt (whinstone). Unmetamorphosed sedimentary rocks such as sand or limestone are subject to weathering, and tend to crumble under heavy and prolonged traffic loads.

Such known refurbishment methods, either without bedding and jointing, or using conventional lime-sand mortar tend to provide only poor support of the stone blocks, making accurate alignment of the block, with the surrounding road surface difficult, which leads to an uneven finished road surface; provide poor energy absorbing capabilities, and have low weather and UV resistance, especially at the top level of the joint. With slow mortar setting times it is also usually necessary to close each road section for more than one day, and conventional mortars have poor long-term adhesion to the concrete footing and tend to crush and fragment under prolonged traffic loading stress.

An object of the invention is to provide a method of road refurbishment which ameliorates these conditions and to provide a mortar composition with improved bedding, weathering and energy absorption properties.

According to the invention, a method of refurbishing a road surface comprises a method of refurbishing a road surface comprising locating a plurality of stone blocks on a foundation, with gaps between each stone block and adjacent stone blocks, and filling the gaps between adjacent blocks with a jointing composition.

Preferably, a top jointing composition is used to fill the gaps to the intended road surface level, to provide weather resistance.

In some cases a bedding composition may be laid before locating the stone blocks or setts.

In accordance with a second aspect of the invention, there is provided a mortar composition for use in the method of the invention, comprising a polyol component and an isocyanate component, which are mixed immediately prior to use to form a polyurethane composition on curing. The composition preferably contains additional aggregates or fillers such as crushed rock, sand, or the like.

A mortar composition according to the invention is preferably used for each phase of the process, that is the bedding composition, the jointing composition and the top jointing composition may each be a composition according to the invention, but differing in their exact formulations.

For example, the bedding composition may advantageously comprise a major proportion of a natural, or synthetic oil, such as linseed oil, rape oil, etc. The aggregate component of the bedding composition may include rubber crumb or other elastic or resilient particles, and/or lime as calcium oxide and may comprise a particulate mineral such as bauxite, or other aluminium oxide material, but preferably includes crushed granite. The particle size may range from dust up to 6mm.

The polyol may comprise castor oil as a polyhydroxyl component for co-reaction with the isocyanate component, or may comprise another synthetic polyester or polyether based polyol which is formulated to be mixed with the isocyanate component.

By way of comparison, the jointing compound may simply consist of the polyol and isocyanate components, and dry sand or washed and dried gravel with a particle size up to 10mm as a bulk aggregate.

The formulation of the polyol component may include small (sometimes trace) quantities of additives such as catalysts, foam suppressing agents, flow promoting agents, thixotropic additives, and/or molecular sieves, for use in the bedding compound.

The polyol component of the top jointing compound may in addition to the above contain pigments, a filler such as china clay, UV stabilisers, and/or antioxidants.

The chemically active component of the polyol component of the composition according to the invention may comprise a polyether polyol, or a mixture of polyether triol and polyether diol. Sorbitol polyether may also be present.

The jointing compound may be applied, after laying the stone blocks or setts, on established traditional bedding or freshly bedded setts after a bedding composition has cured with cleaned out gaps between them. The top of the setts, which are preferably granite, may be coated using a foam roller with a wax emulsion which is allowed to dry to protect the visible face of the setts from the application of the polyurethane aggregate. The polyurethane jointing compound may be mixed with crushed granite aggregate in a Dane mixer at a ratio of 10-15% polyurethane to 85-90% aggregate. The mix may then be poured out onto the granite sett surface and swept into the gaps by brush and tamped down firmly to within 1 to 2cm of the top.

The top jointing compound, if any, may be poured into the upper parts of the gaps after setting of the jointing compound. Preferred top jointing compounds tend to gel rapidly and thus should be poured immediately after hand mixing, or using mechanical metering and dispensing apparatus, continuous mixing and pouring of the top jointing composition may be employed.

After application and curing of the top jointing compound, the wax emulsion may be removed by water jet to return the upper surface to its natural appearance.

It is not always necessary to apply a top jointing compound, in which case the jointing compound may simply be applied to fill the gaps up to the road surface level.

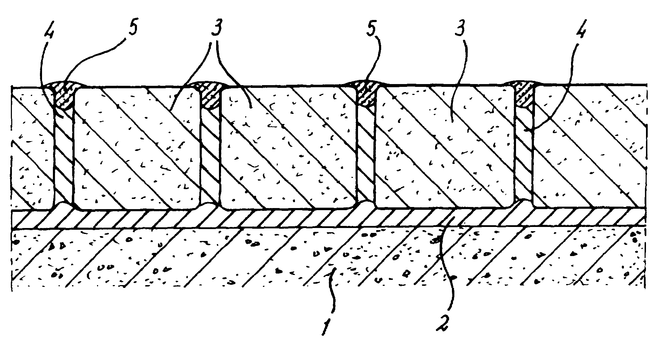

A preferred method, and compositions according to the invention will now be described by way of example, with reference to the accompanying drawing, which is a cross-sectional view of part of a road structure which has been refurbished by the process according to the invention.

In the drawing, a part of a refurbished roadway comprises a concrete footing 1, which has earlier been freshly cast and has then been allowed to dry. This may be a standard concrete formulation, or a proprietary formulation, such as Tarmac Topmix Limited's TOPROC (Trade Mark). Alternatively the footing 1 may comprise older concrete which has been scabbled or cleaned and treated with a primer, e.g. a moisture cure polyurethane primer, such as Hyperlast Limited's DURELAST (Trade Mark) which comprises 60% polyurethane in xylene.

The next step in the refurbishment procedure comprises spreading a layer 2 of a bedding composition over the surface of the concrete footing 1. An example of a formulation of this bedding composition is set out below.

A plurality of stone blocks 3 is then disposed on the bedding layer 2, the blocks each being spaced with a gap between each block and all the adjacent blocks. The blocks are preferably granite setts, but other stone materials may be used including whinstone and millstone grit, in the form of cobbles or flags.

The bedding layer 2 allows setting of the blocks 3 in the layer and provides a support and cushioning layer between the blocks 3 and the footing 1.

The bedding composition is then allowed to cure sufficiently to withstand foot traffic, and then a jointing composition 4 is applied into the gaps between the blocks 3. This application may be in the form of a dry powder mixture which is brushed into the gaps after application of a protective wax emulsion using a foam roller to the tops of the setts. The gaps are filled with the jointing composition to within a short distance of the upper faces of the stone blocks 3, and is then allowed to set. The composition may be premixed in a Dane mixer.

Finally, a top jointing composition 5 is applied to provide weather resistance. This is carried out by mixing the two components and pouring this into the tops of the joints above the set jointing component up to the road surface level. This composition tends to gel rapidly and thus is either hand mixed and poured immediately or by a continuous mechanical mixing and dispensing device. After curing of the top jointing composition, the wax emulsion is removed by water jet to return the top surface of the setts to its natural appearance.

Formulations of the compositions used in the method set out above according to the invention will now be set out by way of example:-

| Composition 1 (Bedding Composition) | |
|---|---|
| a) Polyol component | |

| | parts by weight |
|---|---|
| Castor oil | 70.75 |
| Polyether polyol (f = 4-5) | 23.6 |
| Molecular sieve | 2.8 |
| Antifoaming agent | 0.2 |
| Catalyst (phenyl mercury salt) | 0.2 |
| Acrylic flow agent | 0.2 |
| Silica Thixotropic additive | 2.25 |
| b) lsocyanate component | |
| Polymeric methylene diphenyl diisocyanate | |
| (e.g. Suprasec 5001, by ICI) - 100% | |
| c) Aggregates | |
| Sand (Chelford 30) | 240 |
| Crushed granite | 160 |
| Rubber crumb | 60 |
| Calcium oxide | 20 |

Alternatively, bauxite or other aluminium oxide mineral may be used.

The polyol is mixed with the isocyanate in a ratio of 100 parts of polyol to 60 parts of isocyanate to form a polyurethane precursor in a mixer. Curing begins on admixture.

The aggregates are added to the polyurethane precursor in the weight ratio of from 1 part polyurethane to 5 parts aggregate to 1 part polyurethane to 20 parts aggregate.

The available working time for the mixture is from about 30 minutes to 90 minutes before curing is too far advanced for the mixture to be workable.

| Composition 2 (Jointing Composition) | |
|---|---|
| a) Polyol component | |
| | - as Composition 1 |
| b) Isocyanate component | |
| | - as Composition 1 |
| c) Aggregates | |
| Dry sand (90 mesh) | |
| or Mixture of sharp-angle aggregates, e.g. Alumina and/or crushed granite | |
| 5-8mm particle size | 100% |

The components are mixed in the weight ratios:-

| | |
|---|---|
| Polyol | 100 |
| lsocyanate | 50 |
| Aggregate | 450 |

It is preferred that an aggregate is used which imparts high compressive strength to the finished polyurethane aggregate composition. The preferred aggregates should generally comprise sharp or low angle particles, rather than rounded particles. This allows better packing in the bedding and joints to prevent movement during vibration during service.

The following composition gave a compressive strength of 45 MPa with a yield point at 10% compressive strain (small cylindrical blocks 25mm diameter by 30mm high) cured for one week at 23°C and 50% relative humidity.

| Composition 3 - Jointing Compound (Second Example) | |
|---|---|
| Polyol component - as Composition 1 | 100 parts |
| Isocyanate component - Suprasec 2050 | 60 parts |
| Aggregate - Crushed red granite (dust to 5mm) | 960 parts |

| Composition 4 (Top Jointing Composition) | |
|---|---|
| a) Polyol component | |

| | parts by weight |
|---|---|
| Polyether triol (Caradol Ed 56-07) | 23.92 |
| Polyether diol (Voranol P400) | 29.24 |
| Sorbitol polyether (Voranol RN490) | 2.90 |
| Molecular sieve (drying agent) | 4.89 |
| Catalyst (phenyl mercury salt) | 0.40 |
| Black pigment stainer | 0.97 |
| White pigment stainer | 0.49 |
| China clay filler | 33.23 |
| Precipitated CaCO₃ | 2.45 |
| UV Stabiliser (Tinuvin 292) | 0.98 |
| Antioxidant (Irganox 1135) | 0.49 |
| Diethyl Toluene Diamine | 0.75 |
| b) Isocyanate Component | |
| Polymeric methylene diphenyl diisocyanate | |
| (ICI polyurethanes Suprasec 2030) | 100% |
| c) Aggregates | Nil |

The polyol component is mixed with the isocyanate component in a weight ratio of 3.4/1.

The gel time is approximately 10 minutes at 20°C, so that the composition must be applied immediately after mixing.

| Composition 5 (Top Jointing Composition - 2^{nd} Example) | | |
|---|---|---|
| a) | Polyol component | as Composition 3 |
| b) | Isocyanate component | as Composition 3 |
| c) | Aggregates | |
| | Sand (predried Chelford 30) | 3 parts wt. |
| | Crushed granite | 1 part wt. |

The components are mixed in the ratio by weight:-

| | |
|---|---|
| Polyol | 3.4 parts |
| Isocyanate | 1 part |
| Aggregate | 17.6 parts |

This alternative top jointing composition is used for lower cost applications.

Modifications may be made to the details set out above within the scope of the invention, particularly in the formulation of the compositions used for bedding, jointing and top jointing. The polyurethane used for the bedding compound is preferably between 80 Shore A and 75 Shore D hardness at 20°C, and there is preferably from 5-25% polyurethane in the composition. For the jointing compound polyurethane, the hardness should be between 80 Shore A to 60 Shore D at 20°C, and again there is preferably from 5-25% polyurethane in the composition. The polyurethane for the top jointing compound may be from 70-95 Shore A, and preferably comprises at least 20% of the compound, where aggregate is added.

Foundations other than concrete have been found to be suitable, such as bituminous mastic, or hardened sand cement. Setts may be laid on a pre-existing base if this is in sufficiently good condition.

## Claims

1. A method of refurbishing a road surface comprising locating a plurality of stone blocks on a foundation, with gaps between each stone block and adjacent stone blocks, and filling the gaps between adjacent blocks with a jointing composition.

2. A method according to claim 1 wherein the foundation is a pre-existing foundation.

3. A method according to claim 1 wherein a foundation is provided before locating the stone blocks.

4. A method according to any preceding claim wherein a bedding composition is laid on the foundation to receive the stone blocks.

5. A method according to any preceding claim wherein a top jointing composition is used to fill the gaps to the intended road surface level.

6. A method according to claim 1, or claim 4 or claim 5 wherein at least one of said jointing composition, said bedding composition, or said top jointing composition is a mortar composition comprising a polyol component and an isocyanate component, which are mixed immediately prior to use to form a polyurethane composition on curing, and optionally an aggregate or filler.

7. A method according to claim 6 wherein each of said compositions comprises a mortar composition as set out in claim 6.

8. A method according to any preceding claim wherein after curing of any bedding composition, the tops of the stone blocks are coated with a wax emulsion to protect the exposed surface during application of the jointing and top jointing compounds, and then removed after curing of the top jointing compound.

9. A mortar composition for use in a method according to any preceding claim comprising a polyol component and an isocyanate component which are mixed immediately prior to use to form a polyurethane composition on curing, and optionally an aggregate or filler.

10. A mortar composition according to claim 9 wherein said aggregate or filler comprises granite particles from dust to 0.5mm particle size.

11. A mortar composition according to claim 9 which is adapted for use as a bedding composition and comprises a major proportion of a natural or synthetic oil.

12. A mortar composition according to claim 11 comprising a bedding composition comprising a polyol component which includes:
| | |
|---|---|
| Castor oil | 70.75 parts by weight |
| Polyether polyol | 23.6 parts by weight |
an isocyanate component for mixing with said polyol component comprising polymeric methylene diphenyl diisocyanate, and an aggregate component comprising sand, crushed granite, rubber crumb and CaO.

13. A mortar composition according to claim 9 comprising a jointing composition, comprising a polyol component comprising:
| | |
|---|---|
| Castor oil | 70.75 parts by weight |
| Polyether polyol | 23.6 parts by weight |
an isocyanate component for mixing therewith comprising polymeric methylene diphenyl diisocyanate, and an aggregate component comprising dry sand or a mixture of sharp angle aggregates, i.e. alumina and/or crushed granite, the components being mixed in the ratios:
| | |
|---|---|
| Polyol | 100 p/w |
| Isocyanate | 50 p/w |
| Aggregate | 450 p/w |

14. A mortar composition according to claim 9 comprising a jointing composition comprising a polyol component including 70.75 p/w castor oil and 23.6 p/w polyether polyol, an isocyanate component for mixing therewith comprising Suprasec 2050, and an aggregate component comprising crushed red granite with a particle size up to 5mm, the proportions of said components being:
| | |
|---|---|
| Polyol | 100 p/w |
| lsocyanate | 60 p/w |
| Aggregate | 960 p/w |

15. A mortar composition according to claim 9 comprising a top jointing composition, comprising a polyol component comprising:
| | |
|---|---|
| Polyether triol | 23.92 p/w |
| Polyether diol | 29.24 p/w |
| Filler | 35 p/w |
an isocyanate component for mixing therewith comprising polymeric methylene diphenyl diisocyanate, and having substantially no aggregate component, and the ratio of polyol component to diisocyanate component being 3.4/1.

16. A mortar composition according to claim 15 comprising a top jointing composition, further including an aggregate component comprising 3 parts by weight of sand and 1 part by weight of crushed granite, the components being mixed in the ratios:
| | |
|---|---|
| Polyol | 3.4 p/w |
| Isocyanate | 1.0 p/w |
| Aggregate | 17.6 p/w |
